# EUROPEAN PATENT APPLICATION

(11) **EP 2 202 953 A1**
(43) Date of publication of application: **30.06.2010**
(21) Application number: 09151363.0
(22) Date of filing: 26.01.2009
(51) Int. Cl.: H04N 1/04

(54) **Automatic dust-removing filmscanner**

(30) Priority: 23.12.2008 TW 97150231
(71) Applicant: Pacific Image Electronics Co., Ltd., Taipei Hsien 221 (TW)
(72) Inventor: Huang, Kuo-Hao, 221, Taipei Hsien (TW); Lee, Hsin-Wen, 221, Taipei Hsien (TW)
(74) Representative: Dossmann, Gérard

(57) **Abstract**

An automatic dust-removing filmscanner comprises a scanner body, a film holder and a dust-removing element. The scanner body has a film-scanning platform and an image-capture module thereinside and has a slot on the surface thereof. The dust-removing element is installed in the film holder. When the film holder is inserted into the slot to locate the film over the film-scanning platform and enable the image-capture module to retrieve the image data recorded on the films, the dust-removing elements on the film holder simultaneously cleans the film-scanning platform. Therefore, the automatic dust-removing filmscanner not only retrieves image data but also automatically cleans the film-scanning platform at the same time without dismantling the scanner body to maintain the scanning quality.

## Description

The present invention relates to a filmscanner for digitally retrieving image information from films, particularly to a filmscanner able to retrieve image information and automatically remove dust simultaneously.

Different from common document scanners, the filmscanner is specially designed to scan films, whereby the time to transform images on films into digital data is shortened, and the efficiency is promoted. The digital cameras have been the mainstream in the market now. Nevertheless, digital cameras have been popularized for only few years. Therefore, many images are still recorded in traditional films and need to be transformed into digital data. Thereby, the images on traditional films can be preserved longer.

Besides, the traditional camera is still the favorite instrument of some professional photographers. Thus is developed the filmscanner. The structure of a filmscanner is basically similar to that of a common document scanner, including a light source, CCD (Charge Coupled Device), and a glass window. The lid of a common document scanner can be lifted to place a document on the glass window. However, some filmscanners have only a slot, through which one or more films held by a film holder are inserted into the interior of the device for scanning.

The filmscanner can enhance the critical bright regions and dark regions to output a better result. Further, the filmscanner can digitally repair the damages caused scratches, fingerprints, spots, etc., to optimize the digital images.

The manufacturers of the filmscanners pay attention to repair the defects on films but neglect the defects caused by the scanners' own structures. In fact, the quality of the captured images depends not only on the resolution of CCD but also on the clearness of the glass window. If there is dirt on the glass window, the digital image will be blemished no matter how perfect and clean the film is. Further, the higher the resolution of the scanner, the clearer the blemish.

As mentioned above, the traditional document scanner has a liftable lid, and the user can lift the lid to place the document on the glass window. Further, the user can also clean the glass window easily via lifting the lid of the traditional document scanner. Unfortunately, the filmscanner has an almost closed scanning space with only a slot allowing the film holder to enter, and the glass window is arranged inside the scanner. Therefore, the glass window is hard to clean. After a long time of use, the contaminated glass window may either degrade the quality of digital images or scratch the films.

The primary objective of the present invention is to provide an automatic dust-removing filmscanner, wherein the user can directly clean the film-scanning platform without dismantling the filmscanner, whereby the conventional problem of filmscanners is solved.

Another objective of the present invention is to provide an automatic dust-removing filmscanner, which not only uses the image-capture module to retrieve image data recorded on films but also uses the dust-removing element to automatically clean the film-scanning platform at the same time, whereby the scanning quality is guaranteed.

To achieve the abovementioned objectives, the present invention proposes an automatic dust-removing filmscanner, which comprises a scanner body, a film holder and a dust-removing element. The scanner body has a film-scanning platform and an image-capture module thereinside, and a slot on the surface of the scanner body is the only access to the film-scanning platform. The film holder can hold at least one film and has a width about equal to the length of the slot. The film holder is inserted into the slot to locate the film over the film-scanning platform, whereby the image-capture module can retrieve the image data recorded on the film.

The dust-removing element is installed on the bottom of the film holder. The dust-removing element may be a brush, a dust-cleaning paper, a foamed plastic, a plastic scraper, or a non-woven fabric. When the film holder is inserted into the scanner via the slot to locate the film above the film-scanning platform, the dust-removing element simultaneously sweeps through the film-scanning platform and cleans the film-scanning platform. In the present invention, the bottoms of the front end and rear end of the film holder may respectively have dust-removing elements. Thus, the dust-removing element can clean the film-scanning platform not only during the process that the film holder enters the scanner body but also during the process that the film holder leaves the scanner body. Thereby, the cleaning effect is enhanced, and the quality of the digital image data is further promoted.

Below, the embodiments are described in detail in cooperation with the drawings to make easily understood the objectives, characteristics and accomplishments of the present invention.
Fig.1A and Fig.1B are diagrams schematically showing the appearances of an automatic dust-removing filmscanner according to one embodiment of the present invention;
Fig.2 is a diagram schematically showing the internal structure of an automatic dust-removing filmscanner according to one embodiment of the present invention;
Fig.3 is a diagram schematically showing the film holder of an automatic dust-removing filmscanner according to one embodiment of the present invention;
Fig.4A and Fig.4B are diagrams schematically showing the operations of an automatic dust-removing filmscanner according to one embodiment of the present invention; and
Fig.5 is a diagram schematically showing the cleaning activity of an automatic dust-removing filmscanner according to one embodiment of the present invention.

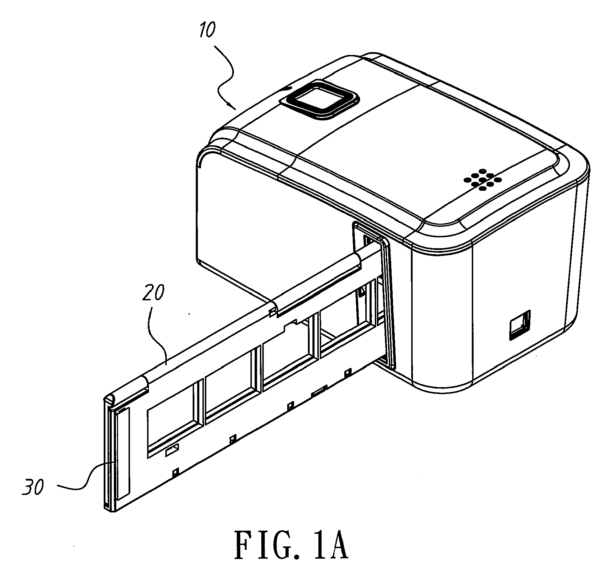

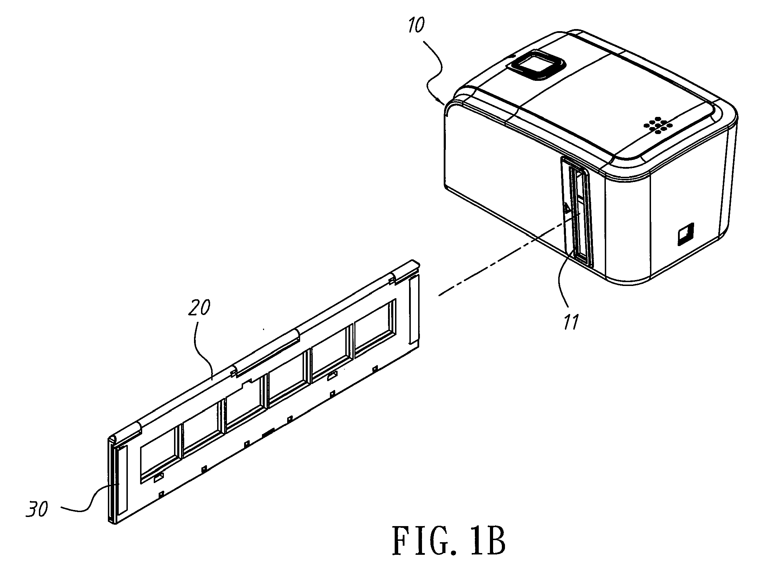

Refer to Fig.1A and Fig.1B diagrams schematically showing the appearances of an automatic dust-removing filmscanner according to one embodiment of the present invention.

The automatic dust-removing filmscanner of the present invention comprises a scanner body 10, a film holder 20 and a dust-removing element 30. The scanner body 10 is an almost closed body containing a film-scanning platform and an image-capture module. The scanner body 10 digitally retrieves the images recorded on films. One or more films are held by the film holder 20 and then sent into the scanner body 10 for scanning. The dust-removing element 30 is arranged in the bottom of the film holder 20 and used to clean the interior of the scanner body 10.

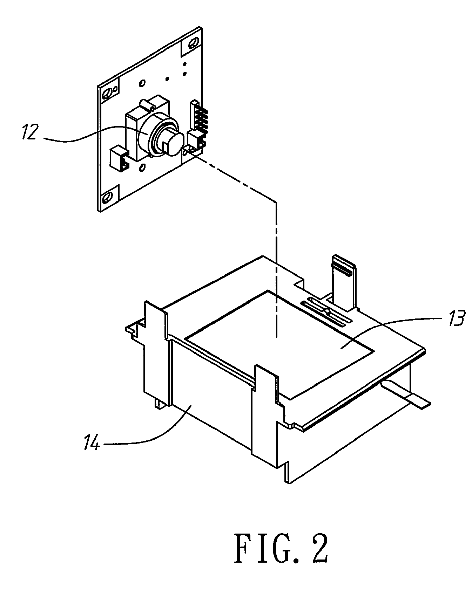

Refer to Fig.2 a diagram schematically showing the internal structure of an automatic dust-removing filmscanner according to one embodiment of the present invention.

The scanner body 10 has a film-scanning platform 13 and an image-capture module thereinside. The film-scanning platform 13 is generally a glass window where the film is placed. The image-capture module digitally retrieves the image data recorded on the films. The image-capture module includes a backlight module 14 having a light source and a photosensor 12. The photosensor 12 may be CCD (Coupled Charge Device) or CMOS (Complementary Metal Oxide Semiconductor). The light from the backlight module 14 passes through the glass window to illuminates the film placed on the film-scanning platform 13. The photosensor 12 receives the image data via the light passing through the film and sends the related digital data to an image reading system for processing.

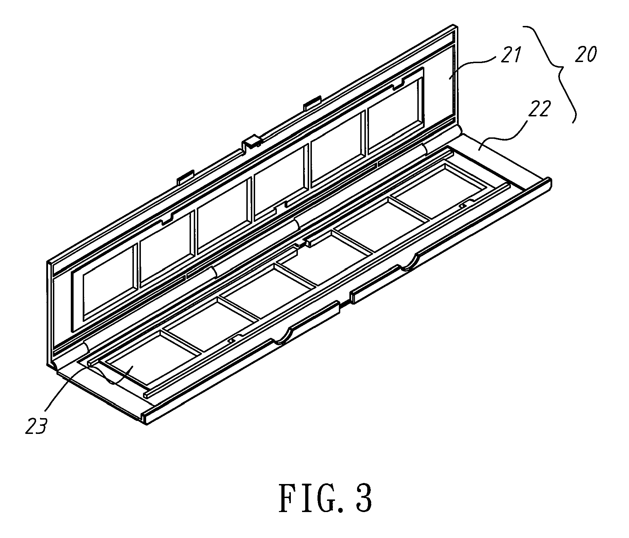

Refer to Fig.3 a diagram schematically showing the film holder of an automatic dust-removing filmscanner according to one embodiment of the present invention.

The film holder 20 includes an upper holder 21 and a lower holder 22, which have an about rectangular-strip appearance and are pivotally coupled to each other in a single side. Thus, the upper holder 21 and lower holder 22 can be pivotally rotated with respectively to each other to have an open state, as shown in Fig.3; alternatively, the upper holder 21 and lower holder 22 can be pivotally rotated with respectively to each other to have a closed state, as shown in Fig.1B. The upper holder 21 and lower holder 22 can form several film sockets 23 accommodating and holding several films. Refer to Fig.1B again. The scanner body 10 has a slot 11 having a length about equal to the width of the film holder 20. The film holder 20 is inserted through the slot 11 into the scanner body 10, and one film held by the film holder 20 is exactly located on the film-scanning platform 13, and then the image-capture module retrieves the image data recorded on the film.

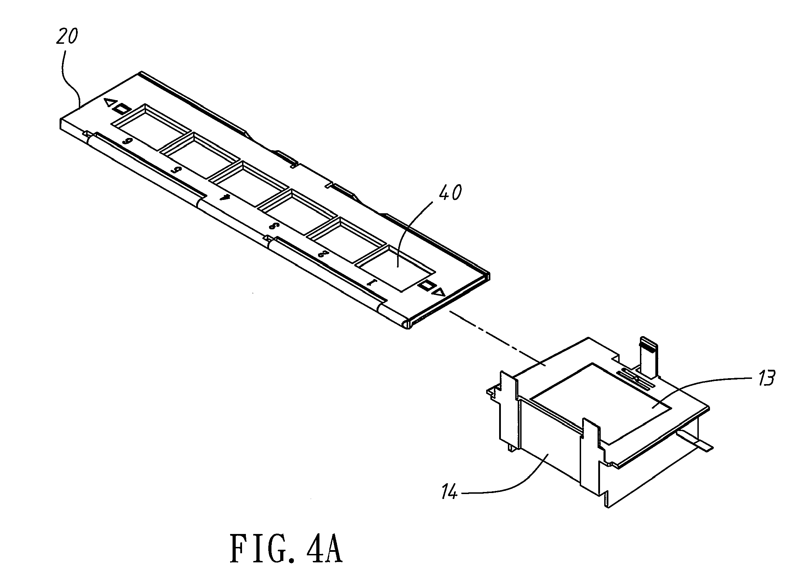

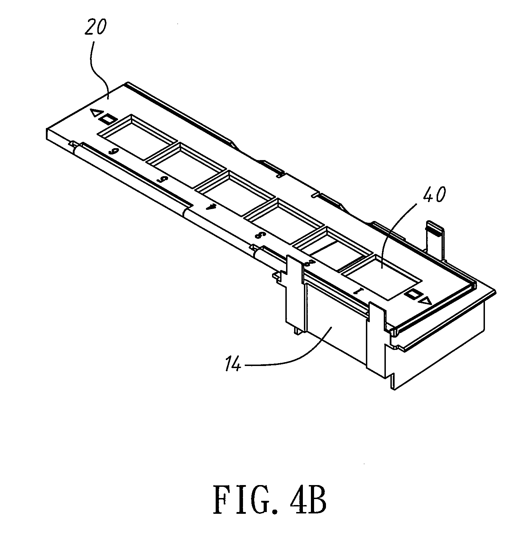

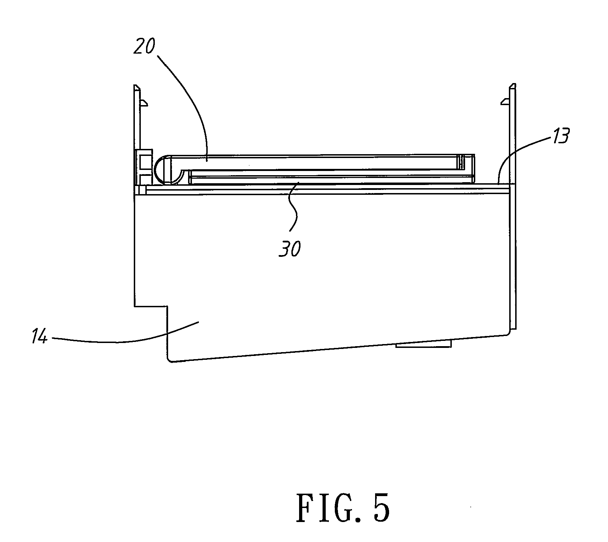

The bottom of the film holder 20 has at least one dust-removing element 30, which may be a brush, a dust-cleaning paper, a foamed plastic, a plastic scraper, or a non-woven fabric. Refer to Fig.4A and Fig.4B. The film holder 20 is designed to contact the film-scanning platform 13 as closely as possible, whereby the image-capture module can clearly retrieve the data on the film 40 held by the film holder 20. The film holder 20 is moved toward the film-scanning platform 13 from one side (as shown in Fig.4A) until the film 40 is exactly located over the film-scanning platform 13 (as shown in Fig.4B). Refer to Fig.5. As the film holder 20 has the dust-removing element 30 at the bottom thereof, the dust-removing element 30 is interposed between the film holder 20 and the film-scanning platform 13 when the film holder 20 is inserted into the slot 11 to reach the film-scanning platform 13. Further, as the film holder 20 contacts the film-scanning platform 13 very closely, the dust-removing element 30 will sweep through the film-scanning platform 13 with a certain pressure during the process that the film holder 20 is pushed to or drawn out from the film-scanning platform 13. Thus, dust is removed from the film-scanning platform 13.

In the present invention, the film holder 20 may have a plurality of dust-removing elements 30. As shown in Fig.1B, the bottoms of the front end and rear end of the film holder 20 respectively have dust-removing elements 30. Thus, the dust-removing elements 30 can clean the film-scanning platform 13 during the process that the film holder 20 is pushed to the film-scanning platform 13 and during the process that the film holder 20 is drawn out from the film-scanning platform 13. Thereby, the cleaning effect is enhanced, and the quality of the digital image data is further promoted.

In the automatic dust-removing filmscanner of the present invention, dust-removing elements are added to the bottom of the film holder. When the film holder is inserted into the scanner body to enable the image-capture module to retrieve the image data recorded on the films, the dust-removing elements on the film holder can simultaneously clean the film-scanning platform. Therefore, the automatic dust-removing filmscanner of the present invention not only can retrieve image data but also can automatically clean the film-scanning platform at the same time without dismantling the scanner body.

The embodiments described above are only to exemplify the present invention but not to limit the scope of the present invention. Any equivalent modification or variation according to the spirit of the present invention is to be also included within the scope of the present invention, which is based on the claims stated below.

## Claims

1. An automatic dust-removing filmscanner comprising:
a scanner body including a film-scanning platform and an image-capture module thereinside, and having a slot interconnecting with said film-scanning platform;
a film holder used to hold at least one film, having a width equal to a length of said slot, inserted into said slot to locate said film over said film-scanning platform and enable said image-capture module to retrieve image data recorded on said film; and
a dust-removing element arranged on a bottom of said film holder and cleaning said film-scanning platform when said film holder is inserted into said slot of said scanner body to reach said film-scanning platform.

2. The automatic dust-removing filmscanner of claim 1, wherein said dust-removing element is a brush.

3. The automatic dust-removing filmscanner of claim 1, wherein said dust-removing element is a dust-cleaning paper.

4. The automatic dust-removing filmscanner of claim 1, wherein said dust-removing element is a foamed plastic.

5. The automatic dust-removing filmscanner of claim 1, wherein said dust-removing element is a plastic scraper.

6. The automatic dust-removing flmscanner of claim 1, wherein said dust-removing element is a non-woven fabric.

7. The automatic dust-removing filmscanner of claim 1, which comprises two dust-removing elements respectively arranged on bottoms of a front end and a rear end of said film holder.

8. The automatic dust-removing filmscanner of claim 1, wherein said dust-removing element is arranged in a front end of said film holder.

9. The automatic dust-removing filmscanner of claim 1, wherein said dust-removing element is arranged in a rear end of said film holder.

10. The automatic dust-removing filmscanner of claim 1, wherein said film-scanning platform is a glass window.

11. The automatic dust-removing filmscanner of claim 1, wherein said image-capture module includes a light source and a photosensor.

12. The automatic dust-removing filmscanner of claim 11, wherein said photosensor is CCD (Coupled Charge Device) or CMOS (Complementary Metal Oxide Semiconductor).
